# EUROPÄISCHE PATENTSCHRIFT

(11) **EP 0 498 397 B1**
(45) Veröffentlichungstag und Bekanntmachung des Hinweises auf die Patenterteilung: **10.05.1995**
(21) Anmeldenummer: 92101910.5
(22) Anmeldetag: 05.02.1992
(51) Int. Cl.: A01K 63/04, C02F 3/06

(54) **Wasseraufbereitungseinheit in einem Fischbecken zur Intensiv-Fischmast**
Water treatment system in a fish tank for intensive fish farming
Appareil pour le traitement d'eau dans un bassin à poissons pour engraissement intensif des poissons

(30) Priorität: 05.02.1991 DE 4103402
(43) Veröffentlichungstag der Anmeldung: 12.08.1992
(73) Patentinhaber: METZ MANNHEIM GMBH, D-68167 Mannheim (DE)
(72) Erfinder: Huemer, Wolfgang, W-6901 Heiligkreuzsteinach (DE); Scheibinger, Ludwig, Dipl.-Ing., W-8000 München 19 (DE)
(74) Vertreter: Meyer-Roedern, Giso, Dr.

(56) Entgegenhaltungen:
- WO-A-88/09615
- CH-A- 661 264
- DE-A- 1 607 151
- DE-C- 3 827 713
- US-A- 3 774 768
- US-A- 3 807 565
- US-A- 4 599 174

## Beschreibung

Die Erfindung betrifft eine Wasseraufbereitungseinheit in einem Fischbecken zur Intensiv-Fischmast mit einem überfluteten Festbettreaktor zur mikrobiologischen Wasseraufbereitung, insbesondere Stickstoffeliminierung, und einem darunter angeordneten ersten Begasungsteil, durch das sauerstoffhaltiges Gas zugeführt und Wasser nach dem Mammut-Pumpeneffekt in aufsteigender Strömung durch den Festbettreaktor gefördert wird.

Eine derartige Wasseraufbereitungseinheit ist aus der DE-C-38 27 713 bekannt. Die Einspeisung von sauerstoffhaltigem Gas durch das unterhalb des Festbettreaktors befindliche Begasungsteil dient hier dazu, die fischbeckeninterne Zirkulationsströmung über den Festbettreaktor aufrechtzuhalten und das Wasser für die mikrobiologische Klärung und die Atemgasversorgung der Fische mit Sauerstoff anzureichern. Für eine effektive Mammutpumpenwirkung bedarf es eines hohen Gasvolumenstroms, der wirtschaftlich nur mit Luft, nicht aber reinem Sauerstoff zu bewirken ist. Es muß eine hohe Gebläseleistung installiert werden, die dem natürlichen Gasmischungsverhältnis der Luft entsprechend ganz überwiegend auf deren Stickstoffanteil, und nur zu einem geringen Teil auf den Sauerstoffanteil entfällt. Bei der Sauerstoffanreicherung des Wassers gilt es, zwischen unterschiedlichen Anforderungen der mikrobiologischen Wasseraufbereitung und der Fischtechnik einen Kompromiß zu finden. Eine aerobe mikrobiologische Nitrifikation, bei der durch Zersetzung von stickstoffhaltigen biologischen Stoffen gebildeter Ammoniak über Nitrit zu Nitrat oxidiert wird, läuft optimal bei einem Sauerstoffgehalt von 3 bis 5 mg pro l Wasser ab. Gute Lebensbedingungen für die Fische herrschen hingegen erst bei einem Sauerstoffgehalt von mindestens 6 mg pro l Wasser. Eine derart hohe Sauerstoffsättigung ist nur bei langer Verweilzeit des Wassers in dem Festbettreaktor zu gewährleisten, der nicht zuletzt aus diesem Grund eine beträchtliche Höhe hat. Da die Luft unter den Festbettreaktor gepumpt werden muß, geht dessen Bauhöhe direkt proportional in die zu installierende Gebläseleistung ein.

Die DE-C-38 27 713 sieht eine Anordnung des Festbettreaktors in einem Graben des Fischbeckens vor, der zugleich als Schlammsammelrinne dient. Ein in dem Graben arbeitender Schlammräumer fährt unter dem Festbettreaktor hindurch und ist deshalb bei Betriebsstörungen und für Wartungszwecke nur schwer zugänglich.

Die DE-A-16 07 151 beschreibt eine Filtervorrichtung für ein Aquarium mit einem Schacht, in den Wasser unten eintritt und durch Einblasen von Luft nach dem Mammut-Pumpeneffekt aufwärts gefördert wird. Das Wasser durchströmt im Fallstrom ein Filter, aus dem es nach unten in einen Raum herabtropft, in dem mittels eines weiteren Luftanschlusses ein Luftpolster aufrecht erhalten wird. Aus diesem Raum gelangt mit Luft angereichertes Wasser durch seitliche Öffnungen in das Aquarium.

Aufgabe der Erfindung ist es, eine im Aufbau unaufwendige, wartungsfreundliche Wasseraufbereitungseinheit der eingangs genannten Art zu schaffen, mit der sich bei verringertem Installations- und laufendem Betriebsaufwand optimale Betriebsbedingungen für die mikrobiologische Wasseraufbereitung und Fischtechnik einstellen lassen und die sich hinsichtlich des Sauerstoffgehalts des Fischwassers durch eine erhöhte regeltechnische Flexibilität und Redundanz auszeichnet.

Diese Aufgabe wird mit einer Wasseraufbereitungseinheit der eingangs genannten Art dadurch gelöst, daß dem Festbettreaktor stromab in einem von dem Wasser aufsteigend durchströmten Schacht mindestens ein zweites Begasungsteil nachgeordnet ist, durch das sauerstoffhaltiges Gas zugeführt und das Wasser mit Sauerstoff angereichert wird.

Erfindungsgemäß ist die Sauerstoffanreicherung des Fischwassers an dem/den zweiten Begasungsteil(en) von der zur Aufrechterhaltung der Zirkulationsströmung dienenden, zugleich den Sauerstoffgehalt in der mikrobiologischen Wasseraufbereitungsstufe bestimmenden Einspeisung sauerstoffhaltigen Gases unterhalb des Festbettreaktors regeltechnisch entkoppelt. Dadurch wird die Möglichkeit eröffnet, einen für die mikrobiologische Wasseraufbereitung und Fischtechnik jeweils optimalen Sauerstoffgehalt des Wassers einzustellen. Der Sauerstoffgehalt des Fischwassers kann variiert, und insbesondere in Fütterungsperioden kurzfristig erhöht werden, ohne in die Wasserzirkulation und mikrobiologische Wasseraufbereitung einzugreifen. Die mikrobiologische Wasseraufbereitungsstufe kann mit einem niedrigeren Sauerstoffgehalt des Wassers effizienter als bislang betrieben und die Bauhöhe des Festbettreaktors reduziert werden. Die zu installierende Gebläseleistung ist entsprechend geringer, und man kann die Wasseraufbereitungseinheit in einem Fischbecken betreiben, das bei einer an den Bedürfnissen der Fische orientierten Tiefe einen ebenen Beckenboden hat. Das reduziert den Bauaufwand erheblich. Das Vorhandensein wenigstens zweier Begasungsteile für die Zufuhr sauerstoffhaltigen Gases schafft Redundanz und erhöht die Betriebssicherheit, da im Fall von Betriebsstörungen eine ausreichende Sauerstoffversorgung der Fische leichter zu gewährleisten ist. Durch die Anordnung des/der zweiten Begasungsteile(s) in einem von dem Wasser aufsteigend durchströmten Schacht wird mit der Einspeisung sauerstoffhaltigen Gases an dem zweiten Begasungsteil eine zusätzliche Wasserförderwirkung nach dem Mammut-Pumpeneffekt erzielt.

In einer bevorzugten Ausführungsform wird an dem ersten Begasungsteil unterhalb des Festbettreaktors Luft eingespeist. Das ist für die Aufrechterhaltung der Zirkulationsströmung und die Einstellung einer relativ niedrigen Sauerstoffkonzentration in der mikrobiologischen Wasseraufbereitungsstufe unter wirtschaftlichen Gesichtspunkten bevorzugt. An dem/den zweiten Begasungsteil(en) kann eine Aufkonzentration des in dem Wasser gelösten Sauerstoffs durch Einspeisen sowohl von Luft, als auch von reinem Sauerstoff erfolgen. Letzteres ist bevorzugt, um mit geringem Energieaufwand den für die Fischtechnik erwünschten relativ hohen Sauerstoffgehalt zu erreichen.

Das/die zweite(n) Begasungsteil(e) kann/können höhenverstellbar in dem Schacht angeordnet sein. Das eröffnet die Möglichkeit, die Zusammensetzung des in dem Wasser gelösten Gases zu beeinflussen. Der Sauerstoffgehalt des Wassers wird primär durch den Sauerstoffvolumenstrom an dem/den zweiten Begasungsteil(en), d. h. der dort pro Zeiteinheit abgegebenen Sauerstoffmenge bestimmt. Zugleich abgegebene Fremdgase wie Stickstoff und Kohlendioxid lösen sich umso weniger in dem Wasser, je niedriger das zweite Begasungsteil darin eintaucht, und werden oberhalb des Begasungsteils von dem Wasser gestrippt. Man kann also bei Bedarf den Fremdgasanteil durch einfache Höhenverstellung des Begasungsteils in dem Schacht variieren und eine für die Fische gesundheitsschädliche Übersättigung des Wassers mit gelöstem Fremdgas mit Sicherheit vermeiden.

In einer bevorzugten Ausführungsform läßt/lassen sich das/die Begasungsteil(e) von oben in den Schacht einfahren und ganz daraus ausfahren. Das ist für Wartungszwecke bevorzugt.

Vorzugsweise ist stromab von dem Festbettreaktor vor dem/den zweiten Begasungsteil(en) eine Entgasungs- und Koagulationszone sowie eine Sedimentationszone vorgesehen. In ersterer wird eine effektive Koagulation von Schlamm zu größeren und schwereren Flocken erreicht, die zusammen mit anderen sich schnell absetzenden Verunreinigungen des Wassers, insbesondere Futterresten, Kot, aus dem Festbettreaktor mitgerissenem Biorasen usw. in der Sedimentationszone noch vor dem/den zweiten Begasungsteil(en) abgeschieden und von dem Fischwasser ferngehalten werden. Da die mit den Schlammflocken einhergehende zusätzliche Sauerstoffzehrung entfällt, wird der Wirkungsgrad des zweiten Begasungsteils bzw. der zweiten Begasungsteile verbessert.

Der das/die zweite(n) Begasungsteil(e) enthaltende Schacht liegt vorzugsweise auf gleicher Höhe mit dem Festbettreaktor. Eine solche Nebeneinanderanordnung des Festbettreaktors und des Schachts spart Bauhöhe auf Kosten der Baubreite. Das ist wirtschaftlich vorteilhaft, da eine geringe Bauhöhe der Wasseraufbereitungseinheit die zu installierende Gebläseleistung niedrig hält und Vereinfachungen in der Fischbeckengeometrie ermöglicht. Insbesondere kann die Wasseraufbereitungseinheit in einem relativ flachen Becken mit ebenem Boden installiert werden.

Der Strömungsweg des Wassers in den von unten angeströmten Schacht schließt einen auf den Festbettreaktor folgenden Strömungsumlenkbereich und Fallströmungsbereich ein, der sich effektiv als Entgasungs- und Koagulationszone nutzen läßt. Eine bevorzugte Sedimentationszone wird von einem Strömungsumlenkbereich vor dem Eintritt in den von unten angeströmten Schacht gebildet, wo eine Strömungsberuhigung mit Schwerkraftabscheidung und/oder eine hydrozyklonartige Feststoffabscheidung erfolgt.

Am Eintritt in den Schacht kann eine strömungsleitende, die Sedimentationszone vorzugsweise vergrößernde Blende angeordnet sein, die die Abscheidewirkung in der Sedimentationszone verbessert.

In der Sedimentationszone arbeitet vorzugsweise ein Schlammräumer, Saugräumer o. ä., der in vorteilhafter Weise für Wartungszwecke von oben zugänglich ist.

Am oberen Ende des Schachts kann sich eine Ausgasungs- und Wasserberuhigungszone befinden, in der das Wasser nach dem Strippeffekt von nicht darin gelöstem Gas befreit wird. Dadurch wird eine die Gesundheit der Fische potentiell beeinträchtigende Gasübersättigung des Wassers verhindert. Die Wasserberuhigungszone dient weiterhin der Vermeidung von für die Fische unzuträglichen zu hohen Strömungsgeschwindigkeiten in dem Fischwasserteil.

Die erfindungsgemäße Wasseraufbereitungseinheit kann derart in ein Fischbecken eingebaut sein, daß sich ein einseitig angeströmter Festbettreaktor am Beckenrand befindet und sich zur Beckenmitte hin eine Entgasungs- und Koagulationszone, eine Sedimentationszone und ein Schacht mit wenigstens einem zweiten Begasungsteil an den Festbettreaktor anschließt. Dieser Aufbau eignet sich besonders für kleine Fischbecken und ist für eine einfache Betriebsüberwachung und Wartung bevorzugt.

Es besteht aber auch die Möglichkeit, die Wasseraufbereitungseinheit in der Mitte eines Fischbeckens zu installieren, wobei sich an den beidseitig angeströmten Festbettreaktor zu beiden Seiten je eine Entgasungs- und Koagulationszone, eine Sedimentationszone und ein Schacht mit wenigstens einem zweiten Begasungsteil anschließen. Dieser Aufbau eignet sich besonders für größere Fischbecken. Es besteht die Möglichkeit, die Begasungsteile in den beiden Schächten unterschiedlich zu betreiben und den Sauerstoffgehalt des Fischwassers in den durch die Wasseraufbereitungseinheit abgeteilten Beckenhälften voneinander unabhängig zu regeln und, falls erwünscht, unterschiedlich einzustellen.

Bei beiden Ausführungsvarianten kann das Fischbecken durch vorzugsweise quer zu der Hauptrichtung der Wasseraufbereitungseinheit sich erstreckende Wände in einzelne Fischkammern unterteilt sein. Der Schacht ist durch entsprechende Wände in Schachtabschnitte unterteilt, die den Fischkammern gegenüberliegen und je ein zweites Begasungsteil enthalten. Man kann so die Begasungsteile in den Schachtabschnitten unterschiedlich betreiben und den Sauerstoffgehalt des Fischwassers in den einzelnen Fischkammern unabhängig voneinander regeln und gegebenenfalls unterschiedlich einstellen, um beispielsweise die Lebensbedingungen für verschiedene Fischarten bei minimalem Energiebedarf individuell zu optimieren.

Die erfindungsgemäße Wasseraufbereitungseinheit kann in einem Graben des Fischbeckens installiert sein. Diese Anordnung der an sich niedrig bauenden Wasseraufbereitungseinheit in einem Graben, der nicht oder zumindest nicht notwendigerweise als Schlammsammelrinne ausgelegt ist, empfiehlt sich für sehr flache Fischbecken z. B. für die Mast bodenbewohnender Fische.

Die Erfindung wird im folgenden anhand von in den Zeichnungen dargestellten Ausführungsbeispielen näher erläutert. Schematisch zeigen:
- Fig. 1: einen Querschnitt durch ein Fischbecken mit einer an dessen Querseite angeordneten, einseitig angeströmten Wasseraufbereitungseinheit;
- Fig. 2: eine Draufsicht auf eine Variante des Fischbeckens mit Blick in Richtung II von Fig. 1; und
- Fig. 3: einen Querschnitt durch ein weiteres Fischbecken mit einer mittig angeordneten, beidseitig angeströmten Wasseraufbereitungseinheit.

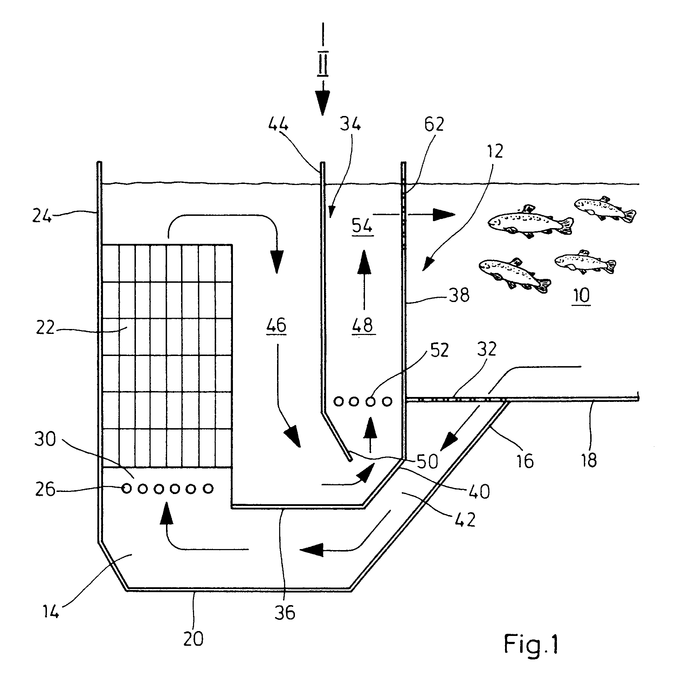

Das in Fig. 1 gezeigte Fischbecken 10 ist rechteckig. Es enthält eine Wasseraufbereitungseinheit 12, die sich entlang einer seiner Querseiten erstreckt. Die Wasseraufbereitungseinheit 12 ist in einem Graben 14 des Fischbeckens 10 installiert, der mit einer Schrägwand 16 von dem ebenen Boden 18 des Fischbeckens 10 abfällt und einen ebenen Grabenboden 20 hat.

Zu der Wasseraufbereitungseinheit 12 gehört ein von unten angeströmter überfluteter Festbettreaktor 22 in Gestalt eines aus einer Vielzahl von Segmenten aufgebauten quaderförmigen Blocks. Die Segmente bestehen aus gezogener Kunststoffolie und schließen geschlossene aufsteigende Strömungswege zwischen sich ein, an denen eine Nitrifikation bewirkende Mikroorganismen angesiedelt sind. Der Festbettreaktor 22 ist der Querseitenwand 24 des Fischbeckens 10 benachbart mit Abstand oberhalb des Grabenbodens 20 in das Fischbecken 10 eingebaut.

Unterhalb des Festbettreaktors 22 ist ein erstes Begasungsteil 26 angeordnet. Durch das Begasungsteil 26 wird Luft in das Wasser eingespeist und das mit Luftsauerstoff angereicherte Wasser nach dem Mammut-Pumpeneffekt in aufsteigender Strömung durch den Festbettreaktor 22 gefördert. Das Begasungsteil 26 ist in einem solchen Abstand von dem Festbettreaktor 22 angeordnet, daß dazwischen eine Mischzone 30 zur gleichmäßigen Durchmischung von Luft und Wasser besteht. Im Interesse einer hohen Effektivität der unter aeroben Bedingungen ablaufenden Nitrifikation wird die Lufteinspeisung so geregelt, daß sich eine optimale Sauerstoffkonzentration für den mikrobiologischen Abbau einstellt.

Nach Durchtritt durch den Festbettreaktor 22 strömt das Wasser oberhalb davon in Richtung von der Querseitenwand 24 des Fischbeckens 10 weg in eine Wanne 34, die sich mit im wesentlichen rechteckigem Grundriß parallel vor dem Festbettreaktor 22 erstreckt. Der ebene Boden 36 der Wanne 34 kommt etwa auf der Höhe des ersten Begasungsteils 26 zu liegen. Die dem Festbettreaktor 22 abgewandte Vorderwand 38 der Wanne 34 ist im Übergangsbereich zum Wannenboden 36 abgeschrägt, so daß sie parallel zu der Schrägwand 16 des Grabens 14 verläuft. Dadurch wird ein in Fallströmung durchlaufener Eintrittsspalt 42 für Wasser aus dem Fischbecken 10 gebildet, das die Wanne 34 unterströmt, um in den Festbettreaktor 22 zu gelangen. Die Öffnung des Eintrittsspalts 42 ist durch ein für die Fische nicht passierbares Gitter 32, Lochblech u. ä. abgedeckt.

Die Wanne 34 wird durch eine in Querrichtung sich erstreckende, nach oben aus dem Wasser austretende Trennwand 44 in eine dem Festbettreaktor 22 benachbarte Fallströmungszone 46 und einen aufsteigend durchströmten Schacht 48 unterteilt. Die Trennwand 44 endet oberhalb des Wannenbodens 36. Ihr Ende bildet eine in Richtung auf den Schacht 48 hin abgeschrägte Blende 50 mit strömungsleitender Funktion.

In dem Schacht 48 ist ein zweites Begasungsteil 52 angeordnet, mit dem ein sauerstoffhaltiges Gas, beispielsweise Luft, vorzugsweise aber reiner Sauerstoff, in das Wasser eingeblasen wird, um dessen Sauerstoffgehalt zu erhöhen und optimale Lebensbedingungen für die in dem Becken 10 gehaltenen Fische zu gewährleisten. Das zweite Begasungsteil 52 läßt sich in dem Schacht 48 in der Höhe verstellen, um das Strippen von nicht gelöstem Gas zu beeinflussen. Zu Wartungszwecken wird das zweite Begasungsteil 52 nach oben aus dem Schacht 48 herausgezogen. Mit dem Betrieb des zweiten Begasungsteils 52 geht ein zusätzlicher Mammut-Pumpeneffekt einher. Im wesentlichen wird die Zirkulationsströmung des Wassers in dem Fischbecken 10 aber durch die Luftzufuhr am ersten Begasungsteil 26 aufrechterhalten.

Das mit Sauerstoff angereicherte Wasser strömt durch ein für die Fische nicht passierbares Gitter 62, Lochblech u. ä. über die Oberkante der Wannenvorderwand 38 in das Fischbecken 10 ein. Das obere Ende des Schachts 48 bildet eine Ausgasungs- und Wasserberuhigungszone 54, in der das Wasser von nicht gelöstem Gas befreit wird und eine Beruhigung der Wasserströmung eintritt. Beides ist für das Wohlbefinden der Fische von Bedeutung.

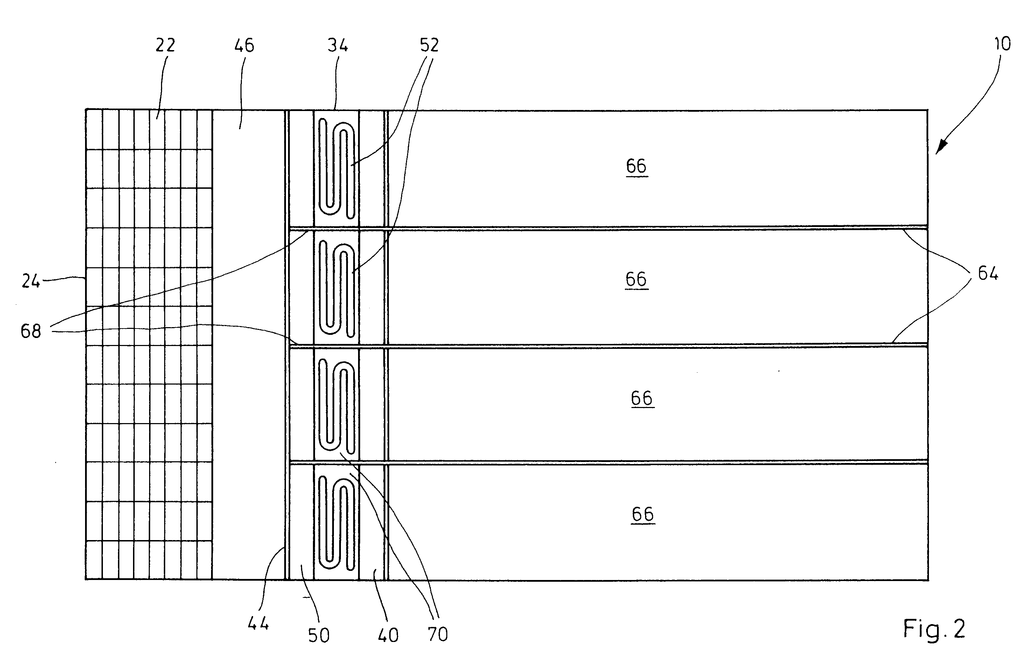

Bei der in Fig. 2 gezeigten Variante ist das Fischbecken 10 durch Längswände 64 in Fischkammern 66 unterteilt, die miteinander nur über die gemeinsame Wasseraufbereitungseinheit 12 kommunizieren. Der Schacht 48 ist durch entsprechende Längswände 68 in Schachtabschnitte 70 unterteilt, die den Fischkammern 66 gegenüberliegen und je ein zweites Begasungsteil 52 enthalten. Die zweiten Begasungsteile 52 werden unabhängig voneinder betrieben, so daß sich der Sauerstoffgehalt des Wassers in den Fischkammern 66 unterschiedlich einstellen läßt.

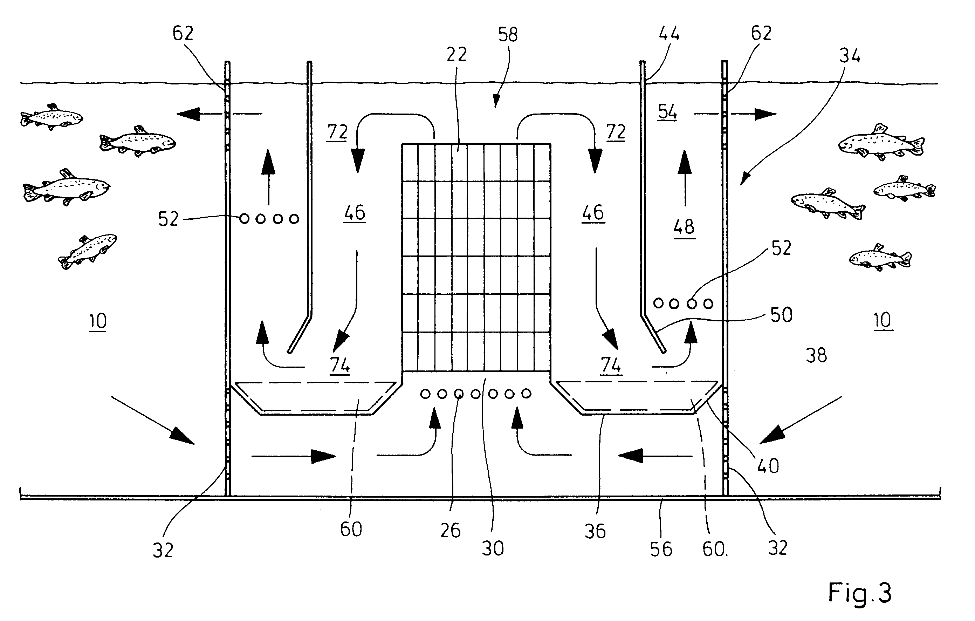

Fig. 3 zeigt ein im Grundriß rechteckiges Fischbecken 10 mit einem durchweg ebenen Boden 56. In der Mitte des Fischbeckens 10 ist mit Erstreckung in Querrichtung eine Wasseraufbereitungseinheit 58 angeordnet, die von beiden Seiten angeströmt wird. Die beidseitigen Wassereintrittsspalte unterhalb der Wasseraufbereitungseinheit 58 sind durch für die Fische nicht passierbare Gitter 32, Lochbleche o. ä. abgedeckt, die sich für die gelegentliche Reinigung des Beckenbodens 56 mit einem Saugräumer o. ä. öffnen lassen.

Die Wasseraufbereitungseinheit 58 hat einen symmetrischen Aufbau, wobei ihre Halbseiten jeweils im wesentlichen der zuvor beschriebenen Wasseraufbereitungseinheit 12 entsprechen. Es ist aber der auf den Festbettreaktor folgende Strömungsumlenkbereich und obere Teil des Fallströmungsbereichs als Entgasungs- und Koagulationszone 72, und der Strömungsumlenkbereich vor dem Eintritt in den Schacht 48 als Sedimentationszone 74 ausgelegt, in der koagulierte Schlammflocken und Feststoffverunreinigungen sedimentieren. In der Sedimentationszone 72 arbeitet ein Schlammräumer, dessen Räumschild 60 angedeutet ist, ein Saugräumer o. ä.

Das vom Fischbecken 10 kommende Wasser durchströmt mitsamt der darin enthaltenen Feststoffverunreinigungen den Festbettreaktor 22. Die Verunreinigungen und mitgerissener Bio-Rasen sedimentieren in der Sedimentationszone 72, die durch die strömungsleitende Blende 50 vergrößert wird. Vorteilhaft bei dieser Anordnung ist, daß es keines Grabens 14 am Boden 56 des Fischbeckens 10 bedarf, und daß der Schlammräumer von oben zugänglich ist.

Es versteht sich, daß die Merkmale der Ausführungsvarianten gemäß Fig. 1 bis Fig. 3 untereinander austauschbar sind. Insbesondere kann auch eine einseitig angeströmte Wasseraufbereitungseinheit 12 in einem Fischbecken 10 mit ebenem Boden 56, und eine beidseitig angeströmte Wasseraufbereitungseinheit 58 in einem Graben 14 installiert sein. Die mit Blick auf Fig. 3 beschriebene Feststoffabscheidung und Schlammräumung kann auch für einseitig angeströmte Wasseraufbereitungseinheiten 12 Verwendung finden. Eine Unterteilung des Fischbeckens 10 in Fischkammern 66, denen Schachtabschnitte 70 der Wasseraufbereitungseinheit 12 mit separaten zweiten Begasungsteilen 52 zugeordnet sind, ist in der einseitig und beidseitig angeströmten Variante gleichermaßen möglich. Die Bezeichnungen "längs" und "quer" für zwei zueinander senkrechte Richtungen sind in der vorstehenden Beschreibung willkürlich gewählt und austauschbar.

### Liste der Bezugszeichen

- 10: Fischbecken
- 12: Wasseraufbereitungseinheit
- 14: Graben
- 16: Schrägwand
- 18: Boden
- 20: Grabenboden
- 22: Festbettreaktor
- 24: Querseitenwand
- 26: erstes Begasungsteil
- 30: Mischzone
- 32: Gitter
- 34: Wanne
- 36: Wannenboden
- 38: Vorderwand
- 40: Schräge
- 42: Eintrittsspalt
- 44: Trennwand
- 46: Fallströmungszone
- 48: Schacht
- 50: Blende
- 52: zweites Begasungsteil
- 54: Ausgasungs- und Wasserberuhigungszone
- 56: Boden
- 58: Wasseraufbereitungseinheit
- 60: Räumschild
- 62: Gitter
- 64: Längswand
- 66: Fischkammer
- 68: Wand
- 70: Schachtabschnitt
- 72: Entgasungs- und Koagulationszone
- 74: Sedimentationszone

## Patentansprüche

1. Wasseraufbereitungseinheit (12) in einem Fischbecken (10) zur Intensiv-Fischmast mit einem überfluteten Festbettreaktor (22) zur mikrobiologischen Wasseraufbereitung, insbesondere Stickstoffeliminierung, und einem darunter angeordneten ersten Begasungsteil (26), durch das sauerstoffhaltiges Gas zugeführt und Wasser nach dem Mammut-Pumpeneffekt in aufsteigender Strömung durch den Festbettreaktor (22) gefördert wird, dadurch gekennzeichnet, daß dem Festbettreaktor (22) stromab in einem von dem Wasser aufsteigend durchströmten Schacht (48) wenigstens ein zweites Begasungsteil (52) nachgeordnet ist, durch das sauerstoffhaltiges Gas zugeführt und das Wasser mit Sauerstoff angereichert wird.

2. Wasseraufbereitungseinheit nach Anspruch 1, dadurch gekennzeichnet, daß an dem ersten Begasungsteil (26) Luft, und an dem/den zweiten Begasungsteil(en) (52) Luft oder vorzugsweise Sauerstoff in das Wasser eingetragen wird.

3. Wasseraufbereitungseinheit nach Anspruch 1 oder 2, dadurch gekennzeichnet, daß das/die zweite(n) Begasungsteil(e) (52) höhenverstellbar in dem Schacht (48) angeordnet ist/sind.

4. Wasseraufbereitungseinheit nach einem der Ansprüche 1 bis 3, dadurch gekennzeichnet, daß das/die zweite(n) Begasungsteil(e) (52) von oben in den Schacht (48) einfahrbar und daraus ausfahrbar ist/sind.

5. Wasseraufbereitungseinheit nach einem der Ansprüche 1 bis 4, dadurch gekennzeichnet, daß stromab von dem Festbettreaktor (22) vor dem/den zweiten Begasungsteil(en) (52) eine Entgasungs- und Koagulationszone (72) sowie eine Sedimentationszone (74) vorgesehen sind.

6. Wasseraufbereitungseinheit nach einem der Ansprüche 1 bis 5, dadurch gekennzeichnet, daß der Schacht (48) im wesentlichen auf gleicher Höhe mit dem Festbettreaktor (22) liegt, und daß ein auf den Festbettreaktor (22) folgender Strömungsumlenk- und/oder Fallströmungsbereich als Entgasungs- und Koagulationszone (72) und ein Strömungsumlenkbereich vor dem Eintritt in den von unten angeströmten Schacht (48) als Sedimentationszone (74) ausgebildet ist.

7. Wasseraufbereitungseinheit nach einem der Ansprüche 1 bis 6, dadurch gekennzeichnet, daß am Eintritt in den Schacht (48) wenigstens eine strömungsleitende, die Sedimentationszone (74) vorzugsweise vergrößernde Blende (50) angeordnet ist.

8. Wasseraufbereitungseinheit nach einem der Ansprüche 1 bis 7, dadurch gekennzeichnet, daß in der Sedimentationszone (74) ein Schlammräumer, Saugräumer o. ä. arbeitet.

9. Wasseraufbereitungseinheit nach einem der Ansprüche 1 bis 8, dadurch gekennzeichnet, daß sich am oberen Ende des Schachts (48) eine Ausgasungs- und Wasserberuhigungszone (54) befindet.

10. Wasseraufbereitungseinheit nach einem der Ansprüche 1 bis 9, dadurch gekennzeichnet, daß sich auf einer Seite eines einseitig angeströmten, vorzugsweise am Beckenrand angeordneten Festbettreaktors (22) eine Entgasungs- und Koagulationszone (72), eine Sedimentationszone (74) und ein Schacht (48) befindet.

11. Wasseraufbereitungseinheit nach einem der Ansprüche 1 bis 9, dadurch gekennzeichnet, daß sich zu beiden Seiten eines vorzugsweise in der Beckenmitte angeordneten, beidseitig angeströmten Festbettreaktors (22) je eine Entgasungs- und Koagulationszone (72), je eine Sedimentationszone (74) und je ein Schacht (48) mit einem zweiten Begasungsteil (52) befindet.

12. Wasseraufbereitungseinheit nach einem der Ansprüche 1 bis 11, dadurch gekennzeichnet, daß das Fischbecken (10) durch vorzugsweise quer zu der Hauptrichtung der Wasseraufbereitungseinheit sich erstreckende Wände (64) in einzelne Fischkammern (66) unterteilt ist, und daß der Schacht (48) durch entsprechende Wände (68) in Schachtabschnitte (70) unterteilt ist, die den Fischkammern (66) gegenüberliegen und je ein zweites Begasungsteil (52) enthalten.

13. Wasseraufbereitungseinheit nach Anspruch 11 oder 12, dadurch gekennzeichnet, daß die zweiten Begasungsteile (52) insbesondere zur Einstellung unterschiedlicher Sauerstoffkonzentrationen in den Fischbeckenhälften bzw. Fischkammern (66) unabhängig voneinander betreibbar sind.

14. Wasseraufbereitungseinheit nach einem der Ansprüche 1 bis 13, dadurch gekennzeichnet, daß sie in einem Graben (14) des Fischbeckens (10) angeordnet ist.

## Claims

1. Water treatment unit (12) in a fish tank (10) for intensive fish farming, having a submerged fixed bed reactor (22) for microbiological water treatment, in particular for the elimination of nitrogen, and arranged below this a first gassing component (26) through which oxygenated gas is supplied and water is conveyed through the fixed bed reactor (22) in ascending flow by the mammoth pump effect, characterized in that there is arranged downstream behind the fixed bed reactor (22) in a shaft (48) through which the water flows in ascending manner at least one second gassing component (52), through which oxygenated gas is supplied and the water is enriched with oxygen.

2. Water treatment unit according to Claim 1, characterized in that air is introduced into the water at the first gassing component (26) and air or preferably oxygen is introduced into the water at the second gassing component(s) (52).

3. Water treatment unit according to Claim 1 or 2, characterized in that the second gassing component(s) (52) is/are arranged vertically adjustably in the shaft (48).

4. Water treatment unit according to one of Claims 1 to 3, characterized in that the second gassing component(s) (52) can be brought into the shaft (48) and removed therefrom from above.

5. Water treatment unit according to one of Claims 1 to 4, characterized in that a degassing and coagulation zone (72) and a sedimentation zone (74) are provided downstream of the fixed bed reactor (22) and in front of the second gassing component(s) (52).

6. Water treatment unit according to one of Claims 1 to 5, characterized in that the shaft (48) lies at substantially the same height as the fixed bed reactor (22), and in that a flow diversion and/or descending flow region following the fixed bed reactor (22) is constructed as the degassing and coagulation zone (72) and a flow diversion region in front of the point of entry to the shaft (48) to which flow comes from below is constructed as the sedimentation zone (74).

7. Water treatment unit according to one of Claims 1 to 6, characterized in that at least one flow-guiding plate (50) which preferably enlarges the sedimentation zone (74) is arranged at the point of entry into the shaft (48).

8. Water treatment unit according to one of Claims 1 to 7, characterized in that a de-sludger, suction-type raker or the like operates in the sedimentation zone (74).

9. Water treatment unit according to one of Claims 1 to 8, characterized in that there is a gas-removal and water-calming zone (54) at the top end of the shaft (48).

10. Water treatment unit according to one of Claims 1 to 9, characterized in that there is a degassing and coagulation zone (72), a sedimentation zone (74) and a shaft (48) on one side of a fixed bed reactor (22) to which flow comes from one side and is preferably arranged on the edge of the tank.

11. Water treatment unit according to one of Claims 1 to 9, characterized in that a respective degassing and coagulation zone (72), a respective sedimentation zone (74) and a respective shaft (48) having a second gassing component (52) are located on both sides of a fixed bed reactor (22) which is preferably arranged in the tank centre and to which flow comes from both sides.

12. Water treatment unit according to one of Claims 1 to 11, characterized in that the fish tank (10) is divided into individual fish chambers (66) by walls (64) which preferably extend transversely to the main direction of the water treatment unit, and in that the shaft (48) is divided by corresponding walls (68) into shaft portions (70) which lie opposite the fish chambers (66) and each contain a second gassing component (52).

13. Water treatment unit according to Claim 11 or 12, characterized in that the second gassing components (52) can be operated independently of one another, in particular for the purpose of setting different oxygen concentrations in the fish tank halves or fish chambers (66).

14. Water treatment unit according to one of Claims 1 to 13, characterized in that it is arranged in a trench (14) in the fish tank (10)

## Revendications

1. Unité de traitement d'eau (12) dans un bassin à poissons (10) pour l'engraissement intensif de poissons, comportant un réacteur à lit fixe (22) submergé, servant au traitement microbiologique de l'eau, en particulier à l'élimination de l'azote, et comportant un premier élément de gazéification (26), situé en dessous, à travers lequel le gaz oxygéné est alimenté et l'eau est refoulée, en employant l'effet d'une pompe à air comprimé, selon un écoulement ascendant à travers le réacteur à lit fixe (22), caractérisée en ce qu'est monté, en aval du réacteur à lit fixe (22), dans une cuve (48) traversée par l'eau dans le sens ascendant, au moins un deuxième élément de gazéification (52), à travers lequel le gaz oxygéné est alimenté et l'eau est enrichie en oxygène.

2. Unité de traitement de l'eau selon la revendication 1, caractérisée en ce que de l'air est introduit dans l'eau au niveau du premier élément de gazéification (26) et de l'air ou, de préférence, de l'oxygène est introduit dans l'eau au niveau du/des deuxième(s) élément(s) de gazéification (52).

3. Unité de traitement de l'eau selon la revendication 1 ou 2, caractérisée en ce que le/les deuxième(s) élément(s) de gazéification (52) est/sont monté(s) dans la cuve (48) de façon à pouvoir être réglé(s) en hauteur.

4. Unité de traitement de l'eau selon l'une des revendications 1 à 3, caractérisée en ce que le(s) deuxième(s) élément(s) de gazéification est/sont susceptible(s) d'être introduit(s) par le haut dans la cuve (48) et peut/peuvent en être retiré(s).

5. Unité de traitement de l'eau selon l'une des revendications 1 à 4, caractérisée en ce que sont prévues, en aval du réacteur a lit fixe (22), avant le deuxième/les deuxièmes élément(s) de gazéification (52), une zone de dégazage et de coagulation (72) ainsi qu'une zone de sédimentation (74).

6. Unité de traitement de l'eau selon l'une des revendications 1 à 5, caractérisée en ce que la cuve (48) se trouve sensiblement à la même hauteur que le réacteur à lit fixe (22), et en ce qu'une zone d'inversion du courant et/ou d'écoulement par chute, faisant suite au réacteur à lit fixe (22), est conformée en zone (72) de dégazage et de coagulation, et une zone d'inversion du courant, avant l'entrée dans la cuve (48), dans laquelle le courant part du bas, est conformée en zone de sédimentation (74).

7. Unité de traitement de l'eau selon l'une des revendications 1 à 6, caractérisée en ce qu'à l'entrée dans la cuve (48), au moins un panneau (50) guidant le courant est prévu et agrandit de préférence la zone de sédimentation (74).

8. Unité de traitement de l'eau selon l'une des revendications 1 à 7, caractérisée en ce qu'un nettoyeur de boue, un nettoyeur à aspiration ou similaire fonctionne dans la zone de sédimentation (74).

9. Unité de traitement de l'eau selon l'une des revendications 1 à 8, caractérisée en ce qu'une zone de dégagement du gaz et de désoxydation de l'eau (54) se trouve à l'extrémité supérieure de la cuve (48).

10. Unité de traitement de l'eau selon l'une des revendications 1 à 9, caractérisée en ce qu'une zone de dégazage et de coagulation (72), une zone de sédimentation (74) et une cuve (48) se trouvent sur un côté d'un réacteur à lit fixe (22) à circulation de courant unilatérale, disposé de préférence sur le bord du bassin.

11. Unité de traitement de l'eau selon l'une des revendications 1 à 9, caractérisée en ce que respectivement une zone de dégazage et de coagulation (72), respectivement une zone de sédimentation (74) et respectivement une cuve (48), ainsi qu'un deuxième élément de gazéification (52) se trouvent de part et d'autre d'un réacteur à lit fixe (22) à circulation de courant bilatérale, disposé de préférence au milieu du bassin.

12. Unité de traitement d'eau selon l'une des revendications 1 à 11, caractérisée en ce que le bassin à poissons (10) est divisé en différents compartiments à poissons (66) par des parois (64) s'étendant de préférence de façon perpendiculaire à l'orientation principale de l'unité de traitement d'eau, et en ce que la cuve (48) est divisée, par des parois (68) correspondantes, en portions de cuve (70), qui sont situées en regard des compartiments à poissons (66) et logent respectivement un deuxième élément de gazéification (52).

13. Unité de traitement d'eau selon la revendication 11 ou 12, caractérisée en ce que les deuxièmes éléments de gazéification (52), en particulier pour le réglage de différentes concentrations d'oxygène dans les moitiés de bassin à poissons ou chambres à poissons (66), sont susceptibles d'être actionnés indépendamment les uns des autres.

14. Unité de traitement d'eau selon l'une des revendications 1 à 13, caractérisée en ce qu'elle est disposée dans une fosse (14) du bassin à poissons (10).
